# EUROPÄISCHE PATENTSCHRIFT

(11) **EP 3 994 481 B1**
(45) Veröffentlichungstag und Bekanntmachung des Hinweises auf die Patenterteilung: **21.05.2025**
(21) Anmeldenummer: 20735152.9
(22) Anmeldetag: 25.06.2020
(51) Int. Cl.: G01S 7/481, G01S 7/4863, G01S 7/4865, G01S 7/497, G01S 17/10, G01S 17/931

(54) **AUSLESEVORRICHTUNG UND LIDAR-MESSVORRICHTUNG**
READING DEVICE AND LIDAR MEASURING DEVICE
DISPOSITIF DE LECTURE ET DISPOSITIF DE MESURE LIDAR

(30) Priorität: 02.07.2019 DE 102019209698
(43) Veröffentlichungstag der Anmeldung: 11.05.2022
(73) Patentinhaber: MicroVision, Inc., Redmond, WA 98052 (US)
(72) Erfinder: BEUSCHEL, Ralf, 88046 Friedrichshafen (DE)
(74) Vertreter: RGTH
(86) Internationale Anmeldenummer: PCT/EP2020/067886
(87) Internationale Veröffentlichungsnummer: WO 2021/001261

(56) Entgegenhaltungen:
- WO-A1-2019/115148
- DE-A1- 102017 223 102

## Beschreibung

Die vorliegende Erfindung betrifft eine Auslesevorrichtung zum Ermitteln einer Signallaufzeit eines Lichtpulses zwischen einer Lidar-Sendeeinheit und einer Lidar-Empfangseinheit einer Lidar-Messvorrichtung in Focal Plane Array-Anordnung. Zudem betrifft die vorliegende Erfindung ein Verfahren zum Ermitteln einer Signallaufzeit sowie eine Lidar-Messvorrichtung.

Moderne Fahrzeuge (Autos, Transporter, Lastwagen, Motorräder, fahrerlose Transportsysteme etc.) umfassen eine Vielzahl an Systemen, die einem Fahrer bzw. Bediener Informationen zur Verfügung stellen und/oder einzelne Funktionen des Fahrzeugs teil- oder vollautomatisiert steuern. Über Sensoren werden die Umgebung des Fahrzeugs sowie gegebenenfalls andere Verkehrsteilnehmer erfasst. Basierend auf den erfassten Daten kann ein Modell der Fahrzeugumgebung erzeugt werden und auf Veränderungen in dieser Fahrzeugumgebung reagiert werden. Durch die fortschreitende Entwicklung im Bereich der autonom und teilautonom fahrenden Fahrzeuge werden der Einfluss und der Wirkungsbereich von Fahrerassistenzsystemen (Advanced Driver Assistance Systems, ADAS) und autonom operierenden Transportsystemen immer größer. Durch die Entwicklung immer präziserer Sensoren ist es möglich, die Umgebung zu erfassen und einzelne Funktionen des Fahrzeugs vollständig oder teilweise ohne Eingriff des Fahrers zu kontrollieren.

Ein wichtiges Sensorprinzip für die Erfassung der Umgebung ist dabei die Lidartechnik (light detection and ranging). Ein Lidarsensor basiert auf der Aussendung von Lichtpulsen und der Detektion des reflektierten Lichts. Mittels einer Laufzeitmessung kann ein Abstand zum Ort der Reflexion berechnet werden. Durch eine Auswertung der empfangenen Reflexionen kann eine Detektion eines Ziels erfolgen. Hinsichtlich der technischen Realisierung des entsprechenden Sensors wird zwischen scannenden Systemen, die zumeist basierend auf Mikrospiegeln funktionieren, und nichtscannenden Systemen, bei denen mehrere Sende- und Empfangselemente statisch nebeneinanderliegend angeordnet sind (insb. sog. Focal Plane Array-Anordnung), unterschieden.

In diesem Zusammenhang wird in der WO 2017/081294 A1 ein Verfahren und eine Vorrichtung zur optischen Distanzmessung beschrieben. Es wird eine Verwendung einer Sendematrix zum Aussenden von Messpulsen und einer Empfangsmatrix zum Empfangen der Messpulse offenbart. Beim Senden der Messpulse werden Untermengen der Sendeelemente der Sendematrix aktiviert.

Eine Herausforderung bei der Detektion von Objekten mittels einer derartigen Lidar-Messvorrichtung in Focal Plane Array-Anordnung liegt in der limitierten Sendeleistung. Die über die Sendeelemente der Lidar-Sendeeinheit emittierte Leistung ist aufgrund der limitierten Chipgröße und der Erwärmung des Chips begrenzt. Die Erhöhung der Leistung ist mit einer Steigerung des Herstellungsaufwands und hohen Kosten verbunden. Dies bedingt eine Reichweitenbegrenzung sowie eine Einschränkung in der Zuverlässigkeit bei der Detektion von Objekten insbesondere im Fernbereich des Lidarsensors.

DE 10 2017 223 102 A1 offenbart ein Multipuls-Lidarsystem zur mehrdimensionalen Erfassung von Objekten. WO 2019/115 148 A1 beschreibt eine LIDAR Empfangseinheit (12) in einer Focal Plane Array-Anordnung umfassend mehrere Sensorelemente (26), die in Makrozellen (44) angeordnet sind.

Ausgehend hiervon stellt sich der vorliegenden Erfindung die Aufgabe, einen Ansatz zur Detektion von Objekten in einem Sichtfeld einer Lidar-Messvorrichtung bereitzustellen. Insbesondere soll die Reichweite und/oder die Zuverlässigkeit bei der Detektion von Objekten bei gleichbleibendem Herstellungsaufwand erhöht werden. Es soll ein kostengünstig realisierbarer und energieeffizienter Lidarsensor geschaffen werden.

Zum Lösen dieser Aufgabe betrifft die Erfindung in einem ersten Aspekt eine Auslesevorrichtung zum Ermitteln einer Signallaufzeit eines Lichtpulses zwischen einer Lidar-Sendeeinheit und einer Lidar-Empfangseinheit einer Lidar-Messvorrichtung in Focal Plane Array-Anordnung nach Anspruch 1.

In einem weiteren Aspekt betrifft die vorliegende Erfindung eine Lidar-Messvorrichtung in Focal Plane Array-Anordnung zum Detektieren von Objekten in einer Umgebung eines Fahrzeugs, mit:
einer Lidar-Sendeeinheit mit einer Vielzahl an Sendeelementen zum Aussenden von Lichtpulsen und einer Lidar-Empfangseinheit mit einer Vielzahl von Sensorelementen zum Empfangen der Lichtpulse, wobei die Sendeelemente und die Sensorelemente in Zeilen angeordnet sind, die parallel zu einer Horizontalebene des Fahrzeugs verlaufen; und
einer erfindungsgemäßen Auslesevorrichtung.

Weitere Aspekte der Erfindung betreffen ein entsprechend der Anpassungsvorrichtung ausgebildetes Verfahren und ein Computerprogrammprodukt mit Programmcode zum Durchführen der Schritte des Verfahrens, wenn der Programmcode auf einem Computer ausgeführt wird, sowie ein Speichermedium, auf dem ein Computerprogramm gespeichert ist, das, wenn es auf einem Computer ausgeführt wird, eine Ausführung des hierin beschriebenen Verfahrens bewirkt.

Bevorzugte Ausgestaltungen der Erfindung werden in den abhängigen Ansprüchen beschrieben. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere können die Auslesevorrichtung, die Lidar-Messvorrichtung sowie das Verfahren und das Computerprogrammprodukt entsprechend der für die Auslesevorrichtung bzw. die Lidar-Messvorrichtung in den abhängigen Ansprüchen beschriebenen Ausgestaltungen ausgeführt sein.

Erfindungsgemäß ist es vorgesehen, dass beim Zusammenfassen der Detektionen der einzelnen Sensorelemente einer Lidar-Empfangseinheit, von denen mehrere in einer Makrozelle einem Sendeelement der Lidar-Sendeeinheit zugeordnet sind, eine Gewichtung vorgenommen wird. Die Gewichtung basiert dabei auf einem Signal-zu-Rausch-Verhältnis des einzelnen Sensorelements. Insbesondere werden Sensorelemente, die ein hohes Signal-zu-Rausch-Verhältnis aufweisen, stärker gewichtet als andere Sensorelemente. Die Gewichtung wird insoweit abhängig davon gewählt, wieviel Leistung das einzelne Sensorelement empfängt. Der erfindungsgemäße Ansatz entspricht einem maximal-ratio-combining Ansatz, wie er aus der Nachrichtentechnik für den Empfang mit mehreren Antennen bekannt ist. Das maximal-ratio-combining Verfahren wird auf ein Lidar-System angewendet. Die Gewichtung der Signale der einzelnen Sensorelemente kann dabei beispielsweise proportional zu einem root mean square (RMS) des Signallevels und/oder invers-proportional zu einem Rauschanteil des Signals gewählt werden. Die Gewichtungsfaktoren werden individuell für jeden Empfangspfad, also für jedes Sensorelement, bestimmt.

Im Vergleich zu bisherigen Ansätzen, bei denen alle einem Sendeelement zugeordneten Sensorelemente in gleicher Weise berücksichtigt werden, kann die Messgenauigkeit verbessert werden. Es ergibt sich eine höhere Reichweite bzw. eine höhere Zuverlässigkeit bei der Detektion von Objekten. Im Vergleich zu Ansätzen, bei denen einzelne Sensorelemente komplett abgeschaltet werden, bewirkt die Wahl von Gewichtungsparametern in Abhängigkeit von einem Signal-zu-Rausch-Verhältnis des jeweiligen Sensorelements eine verbesserte Detektion. Auch Empfangspfade mit schlechtem Empfang werden genutzt, um das Gesamtsignal zu verbessern. Verfahren, bei denen aktive Sensorelemente ausgewählt werden, sind bei starkem Umgebungslicht unter Umständen nicht optimal. Erfindungsgemäß wird eine verbesserte Detektion von Objekten erreicht.

In einer Ausgestaltung der Erfindung ist die Gewichtungseinheit zum Ermitteln der individuellen Gewichtungsparameter basierend auf einer Kalibrierungsvermessung einer Spot-Position auf der Makrozelle ausgebildet, wobeiSensorelemente mit steigendem Abstand zu einem Mittelpunkt der Spot-Position eine geringere Gewichtung erhalten. Vorzugsweise erhalten Sensorelemente außerhalb der Spot-Position eine Gewichtung von 0. Eine Kalibrierungsvermessung entspricht hierbei insbesondere einer Kalibrierung bei der Inbetriebnahme und/oder bei der Herstellung der Lidar-Messvorrichtung. Durch Herstellungstoleranzen und Materialabweichungen variiert eine Spot-Position (eine Abbildungsposition eines Sendeelements) auf der Lidar-Empfangseinheit bzw. auf den mehreren Sensorelementen einer Makrozelle. Diesem Umstand wird üblicherweise dadurch Rechnung getragen, dass die Makrozelle größer als die Spot-Position ausgeführt wird. In einer Kalibrierungsvermessung kann eine Spot-Position vermessen werden und die individuellen Gewichtungsparameter basierend auf dieser Kalibrierung festgelegt werden. Die individuellen Gewichtungsparameter ändern sich also nicht mehr zur Laufzeit, sondern sind für eine Lidar-Messvorrichtung vorgegeben. Es ergibt sich ein effizient umsetzbares Verfahren zum Ermitteln der individuellen Gewichtungsparameter.

In einer weiteren erfindungsgemäßen Ausgestaltung ist die Gewichtungseinheit zum Ermitteln der individuellen Gewichtungsparameter basierend auf einer sequenziellen individuellen Kalibrierungsauslesung der Sensorelemente bei unveränderter Signallaufzeit ausgebildet, wobei Sensorelemente mit einer höheren Anzahl an Detektionen in der Kalibrierungsauslesung eine höhere Gewichtung erhalten. Vorzugsweise erhalten Sensorelemente mit einer Anzahl an Detektionen in der Kalibrierungsauslesung unterhalb eines Schwellenwerts eine Gewichtung von 0. Die Kalibrierungsauslesung entspricht insoweit einem Aktivieren einzelner Sensorelemente nacheinander bei gleichbleibender Signallaufzeit bzw. Spot-Position. Für jedes Sensorelement wird separat geprüft, welcher Signalanteil empfangen werden kann. Es ergibt sich ein effizient realisierbares Verfahren, um die individuellen Gewichtungsparameter vor Inbetriebnahme zu bestimmen.

In einer weiteren Ausgestaltung der Erfindung ist die Gewichtungseinheit zum Ermitteln der individuellen Gewichtungsparameter basierend auf einem individuellen Rauschparameter des Sensorelements, der ein Signalrauschen des Sensorelements beschreibt, ausgebildet. Vorzugsweise ist die Gewichtungseinheit zum Ermitteln des individuellen Rauschparameters basierend auf einer vorhergehenden Laufzeitmessung und/oder basierend auf einer vorgeschalteten Umgebungslichtmessung ausgebildet. Es wird das Rauschen für jedes Sensorelement separat bestimmt. Hierdurch können Herstellungsunterschiede ausgeglichen werden. Beispielsweise kann eine Umgebungslichtmessung in regelmäßigen Abständen durchgeführt werden, wobei davon ausgegangen wird, dass das Umgebungslicht für alle Sensorelemente identisch ist. Je nach Signal des einzelnen Sensorelements kann dann eine individuelle Beeinflussung des Sensorelements durch das Umgebungslicht ermittelt werden. Es ergibt sich eine effiziente Möglichkeit, einen Rauschanteil zu bestimmen.

In einer weiteren erfindungsgemäßen Ausgestaltung ist die Gewichtungseinheit zum Ermitteln von individuellen Gewichtungsparametern mit ganzzahligen Gewichtungsfaktoren ausgebildet, wobei die Summationseinheit zum Erzeugen des Histogramms basierend auf einer mehrfachen Zählung von Detektionen entsprechend den ganzzahligen Gewichtungsfaktoren ausgebildet ist. Die ganzzahligen Gewichtungsfaktoren sind vorzugsweise Zweierpotenzen. Hierdurch wird eine effiziente Implementierbarkeit erreicht. Ganzzahlige Gewichtungsparameter können eine Gewichtung mit vergleichsweise geringem Hardwareaufwand ermöglichen. Besonders vorteilhaft werden Zweierpotenzen verwendet. Es ergibt sich eine kosteneffiziente Umsetzbarkeit.

In einer bevorzugten Ausgestaltung ist die Gewichtungseinheit zum Ermitteln von individuellen Gewichtungsparametern mit ganzzahligen Zählfaktoren ausgebildet. Die Summationseinheit ist zum Erzeugen des Histogramms basierend auf einer ausschließlichen Zählung von Detektionen, die einem Vielfachen des jeweiligen Zählfaktors des Sensorelements entsprechen, und zum Verwerfen der übrigen Detektionen ausgebildet. Die ganzzahligen Zählfaktoren sind vorzugsweise Zweierpotenzen. Es ergibt sich ebenfalls eine effiziente Umsetzbarkeit des Gewichtungsansatzes in Hardware. Die Gewichtung erfolgt durch Verwerfen von Events einzelner Sensorelemente mit niedrigem Signal-zu-Rausch-Verhältnis. Detektionen bzw. Events solcher Sensorelemente werden verworfen. Das Verwerfen kann dabei durch einfache Zähler realisiert werden. Es ergibt sich eine effiziente Umsetzbarkeit und eine hohe Performanz.

In einer weiteren erfindungsgemäßen Ausgestaltung ist die Gewichtungseinheit zum Erzeugen jeweils eines Teilhistogramms für jedes Sensorelement ausgebildet, wobei die Gewichtungseinheit zum Ermitteln der individuellen Gewichtungsparameter basierend auf einer Auswertung der Teilhistogramme ausgebildet und die Summationseinheit zum Erzeugen des Histogramms basierend auf einer mit den individuellen Gewichtungsparametern gewichteten Summation der Teilhistogramme ausgebildet sind. Es wird für jedes Sensorelement ein individuelles Histogramm erzeugt. Die Gewichtungsfaktoren können anhand des Rauschlevels bestimmt werden. Die Teilhistogramme können gewichtet addiert werden, wobei jedes Histogramm-Bin des Teilhistogramms mit einem Gewichtungsfaktor zu einem Gesamthistogramm hinzugefügt wird. Zwar ergibt sich ein vergleichsweise hoher Aufwand für die Berechnung der individuellen Histogramme. Allerdings ist es möglich, die Gewichtungsfaktoren im Nachgang zu einer Messung jeweils optimal für jedes Sensorelement festzulegen. Es ergibt sich eine Festlegung der Gewichtungsfaktoren zur Laufzeit. Eine Anpassung an aktuelle Bedingungen wird erreicht.

Der jeweilige Gewichtungsfaktor ist vorzugsweise für alle Detektionen, insbesondere hinsichtlich aller Bins, eines Sensorelementes gleich, da es sich um einen individuellen Gewichtungsfaktor des entsprechenden Sensorelementes handelt, der sämtliche Detektionen betrifft. Den einzelnen Bins eines Teilhistogramms werden keine individuellen Gewichtungsparameter zugeordnet.

In einer bevorzugten Ausgestaltung ist die Lidar-Messvorrichtung zum Ausführen eines Time Correlated Single Photon Counting-, TCSPC, Messverfahrens ausgebildet. Vorzugsweise wird die Lidar-Messvorrichtung basierend auf einem TCSPC-Messverfahren betrieben. Es werden einzelne Photonenevents gezählt (Detektionen).

In einer bevorzugten Ausgestaltung ist die Lidar-Messvorrichtung zum Anbringen an ein Fahrzeug in einem Bereich an der Stoßstange des Fahrzeugs ausgebildet. Es ergibt sich eine freie Sicht auf Objekte vor bzw. hinter dem Fahrzeug. Eine gute Detektion von Objekten im Umfeld des Fahrzeugs wird erreicht.

Unter einer Focal Plane Array-Anordnung versteht sich eine Konfiguration der Sensorelemente (bzw. der Sendeelemente) im Wesentlichen in einer Ebene. Eine Lidar-Empfangseinheit ist insbesondere ein Mikrochip mit entsprechenden Sensorelementen. Eine Lidar-Sendeeinheit ist ebenfalls insbesondere ein Mikrochip mit entsprechenden Sendeelementen. Die Empfangs- und Sendeeinheit können gemeinsam auf einem Mikrochip angeordnet sein. Die Sende- und Sensorelemente sind beispielsweise jeweils auf einem Chip in Matrixform angeordnet und über eine Fläche des Chips verteilt. Einem Sendeelement sind ein oder mehrere Sensorelemente zugeordnet. Unter einem Lichtpuls einer Lidar-Sendeeinheit wird insbesondere ein Puls von Laserlicht verstanden. Eine Signallaufzeit beschreibt insbesondere die Zeitdauer, die ein Lichtpuls benötigt, der von der Lidar-Sendeeinheit ausgesendet und nach einer Reflexion an einem Objekt in der Umgebung der Lidar-Messvorrichtung von der Lidar-Empfangseinheit empfangen wird. Eine Detektion beschreibt insbesondere ein Auftreffen eines Photons auf einem Sensorelement. Eine Signallaufzeit kann insbesondere basierend auf einer Hochpunktdetektion in dem erzeugten Histogramm ermittelt werden. Eine Umgebung eines Fahrzeugs umfasst insbesondere einen von dem Fahrzeug aus sichtbaren Bereich im Umfeld des Fahrzeugs.

Die Erfindung wird nachfolgend anhand einiger ausgewählter Ausführungsbeispiele im Zusammenhang mit den beiliegenden Zeichnungen näher beschrieben und erläutert. Es zeigen:
- Fig. 1: eine schematische Darstellung einer Lidar-Messvorrichtung gemäß einem Aspekt der vorliegenden Erfindung;
- Fig. 2: eine schematische Darstellung einer erfindungsgemäßen Auslesevorrichtung;
- Fig. 3: eine schematische Darstellung einer Lidar-Sendeeinheit zum Aussenden von Lichtpulsen;
- Fig. 4: eine schematische Darstellung einer Makrozelle der Lidar-Empfangseinheit; und
- Fig. 5: eine schematische Darstellung eines erfindungsgemäßen Verfahrens.

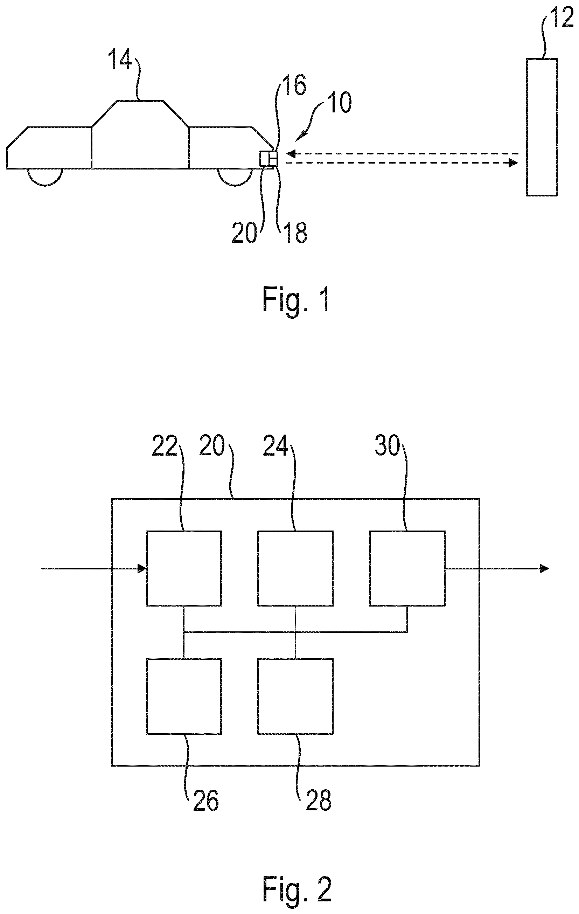

In der Fig. 1 ist schematisch eine erfindungsgemäße Lidar-Messvorrichtung 10 zum Detektieren eines Objekts 12 in einer Umgebung eines Fahrzeugs 14 dargestellt. Die Lidar-Messvorrichtung 10 ist im dargestellten Ausführungsbeispiel in das Fahrzeug 14 integriert. Das Objekt 12 in der Umgebung des Fahrzeugs 14 kann beispielsweise ein anderes Fahrzeug oder auch ein statisches Objekt (Verkehrsschild, Haus, Baum etc.) bzw. ein anderer Verkehrsteilnehmer (Fußgänger, Radfahrer etc.) sein. Die Lidar-Messvorrichtung 10 ist vorzugsweise im Bereich einer Stoßstange des Fahrzeugs 14 montiert und kann insbesondere die Umgebung des Fahrzeugs 14 vor dem Fahrzeug auswerten. Beispielsweise kann die Lidar-Messvorrichtung 10 in die vordere Stoßstange integriert sein.

Die erfindungsgemäße Lidar-Messvorrichtung 10 umfasst eine Lidar-Empfangseinheit 16 sowie eine Lidar-Sendeeinheit 18. Weiterhin umfasst die Lidar-Messvorrichtung 10 eine Auslesevorrichtung 20 zum Anpassen eines Sichtfelds der Lidar-Messvorrichtung 10.

Vorzugsweise sind sowohl die Lidar-Empfangseinheit 16 als auch die Lidar-Sendeeinheit 18 in Focal Plane Array-Konfiguration ausgebildet. Die Elemente der jeweiligen Vorrichtung sind im Wesentlichen in einer Ebene auf einem entsprechenden Chip angeordnet. Der Chip der Lidar-Empfangseinheit bzw. der Lidar-Sendeeinheit ist in einem Brennpunkt einer entsprechenden Optik (Sendeoptik oder Empfangsoptik) angeordnet. Insbesondere sind Sensorelemente der Lidar-Empfangseinheit 16 bzw. Sendeelemente der Lidar-Sendeeinheit 18 im Brennpunkt der jeweiligen Empfangs- bzw. Sendeoptik angeordnet. Diese Optik kann beispielsweise durch ein optisches Linsensystem ausgebildet sein.

Die Sensorelemente der Lidar-Empfangseinheit 16 sind vorzugsweise als SPAD (Single Photon Avalanche Diode) ausgebildet. Die Lidar-Sendeeinheit 18 umfasst mehrere Sendeelemente zum Aussenden von Laserlicht bzw. Laserpulsen. Die Sendeelemente sind vorzugsweise als VCSEL (Vertical Cavity Surface Emitting Laser) ausgebildet. Die Sendeelemente der Lidar-Sendeeinheit 18 sind über eine Fläche eines Sendechips verteilt. Die Sensorelemente der Lidar-Empfangseinheit 16 sind über eine Fläche des Empfangschips verteilt.

Dem Sendechip ist eine Sendeoptik zugewiesen, dem Empfangschip ist eine Empfangsoptik zugewiesen. Die Optik bildet ein aus einem Raumbereich eintreffendes Licht auf den jeweiligen Chip ab. Der Raumbereich entspricht dem Sichtbereich der Lidar-Messvorrichtung 10, der auf Objekte 12 untersucht bzw. sensiert wird. Der Raumbereich der Lidar-Empfangseinheit 16 bzw. der Lidar-Sendeeinheit 18 ist im Wesentlichen identisch. Die Sendeoptik bildet ein Sendeelement auf einen Raumwinkel ab, der einen Teilbereich des Raumbereichs repräsentiert. Das Sendeelement sendet entsprechend Laserlicht in diesen Raumwinkel aus. Die Sendeelemente decken gemeinsam den gesamten Raumbereich ab. Die Empfangsoptik bildet ein Sensorelement auf einen Raumwinkel ab, der einen Teilbereich des Raumbereichs darstellt. Die Anzahl aller Sensorelemente deckt den gesamten Raumbereich ab. Sendeelemente und Sensorelemente, die denselben Raumwinkel betrachten, bilden aufeinander ab und sind entsprechend einander zugewiesen bzw. zugeordnet. Ein Laserlicht eines Sendeelements bildet im Normalfall immer auf das zugehörige Sensorelement ab. Günstigerweise sind mehrere Sensorelemente innerhalb des Raumwinkels eines Sendeelements angeordnet.

Zur Ermittlung bzw. Detektion von Objekten 12 innerhalb des Raumbereichs führt die Lidar-Messvorrichtung 10 einen Messvorgang durch. Ein solcher Messvorgang umfasst einen oder mehrere Messzyklen, je nach konstruktivem Aufbau des Messsystems und dessen Elektronik. Vorzugsweise wird hierbei in der Auslesevorrichtung 20 ein TCSPC-Verfahren (Time Correlated Single Photon Counting Verfahren) verwendet. Hierbei werden einzelne eintreffende Photonen detektiert, insbesondere durch eine SPAD, und der Zeitpunkt der Auslösung des Sensorelements (Detektionszeitpunkt) in einem Speicherelement abgelegt. Der Detektionszeitpunkt steht im Verhältnis zu einem Referenzzeitpunkt, zu dem das Laserlicht ausgesendet wird. Aus der Differenz lässt sich die Laufzeit des Laserlichts ermitteln, woraus der Abstand des Objekts 12 bestimmt werden kann.

Ein Sensorelement der Lidar-Empfangseinheit 16 kann einerseits von dem Laserlicht und andererseits von Umgebungsstrahlung ausgelöst werden. Ein Laserlicht trifft bei einem bestimmten Abstand des Objekts 12 immer zur gleichen Zeit ein, wohingegen die Umgebungsstrahlung jederzeit dieselbe Wahrscheinlichkeit bereitstellt, ein Sensorelement auszulösen. Bei der mehrfachen Durchführung einer Messung, insbesondere mehrerer Messzyklen, summieren sich die Auslösungen des Sensorelements bei dem Detektionszeitpunkt, der der Laufzeit des Laserlichts bezüglich der Entfernung des Objekts entspricht, auf. Demgegenüber verteilen sich die Auslösungen durch die Umgebungsstrahlung gleichmäßig über die Messdauer eines Messzyklus. Eine Messung entspricht dem Aussenden und anschließendem Detektieren des Laserlichts. Die in dem Speicherelement abgelegten Daten der einzelnen Messzyklen eines Messvorgangs ermöglichen eine Auswertung der mehrfach ermittelten Detektionszeitpunkte, um auf den Abstand des Objekts 12 zu schließen.

Ein Sensorelement ist günstigerweise mit einem TDC (Time to Digital Converter) verbunden. Der TDC legt den Zeitpunkt des Auslösens des Sensorelements in dem Speicherelement ab. Ein solches Speicherelement kann beispielsweise als Kurzzeitspeicher oder als Langzeitspeicher ausgebildet sein. Der TDC füllt für einen Messvorgang ein Speicherelement mit den Zeitpunkten, zu denen die Sensorelemente ein eintreffendes Photon detektieren. Dies lässt sich graphisch durch ein Histogramm darstellen, welches auf den Daten des Speicherelements basiert. Bei einem Histogramm ist die Dauer eines Messzyklus in sehr kurze Zeitabschnitte unterteilt (sogenannte Bins).

Wird ein Sensorelement ausgelöst, so erhöht der TDC den Wert eines Bins um 1. Es wird der Bin aufgefüllt, welcher der Laufzeit des Laserpulses entspricht, also die Differenz zwischen Detektionszeitpunkt und Referenzzeitpunkt.

In der Fig. 2 ist schematisch eine erfindungsgemäße Auslesevorrichtung 20 zum Ermitteln einer Signallaufzeit eines Lichtpulses dargestellt. Die Auslesevorrichtung 20 umfasst eine Eingangsschnittstelle 22, eine Gewichtungseinheit 24, eine Summationseinheit 26, eine Laufzeiteinheit 28 sowie eine Ausgabeeinheit 30. Die verschiedenen Einheiten und Schnittstellen können einzeln oder kombiniert in Soft- und/oder in Hardware ausgeführt bzw. implementiert sein. Insbesondere können die Einheiten in Software implementiert sein, die auf einem Prozessor der Lidar-Messvorrichtung ausgeführt wird.

Über die Eingangsschnittstelle 22 werden Detektionen mehrerer Sensorelemente der Lidar-Empfangseinheit empfangen. Insbesondere werden Detektionen einer Makrozelle mit mehreren Sensorelementen empfangen. Eine Detektion kann dabei insbesondere einem Zeitpunkt eines eintreffenden Photons in dem Sensorelement entsprechen. Die Detektionen ergeben sich dabei einerseits aufgrund von registriertem Umgebungslicht (Rauschen) und andererseits aufgrund von reflektierten Lichtpulsen der Lidar-Sendeeinheit an einem Objekt.

In der Gewichtungseinheit 24 wird für jedes einzelne Sensorelement ein individueller Gewichtungsparameter ermittelt. Dieser Gewichtungsparameter gibt insbesondere an, wie stark dieses Sensorelement bei der Generierung des Histogramms für die Makrozelle bzw. für die Messung zu berücksichtigen ist. Die Gewichtungseinheit 24 kann dabei sowohl zum Ermitteln der individuellen Gewichtungsparameter zur Laufzeit, also während des Betriebs der Lidar-Messvorrichtung, als auch zur einmaligen Ermittlung der Gewichtungsparameter vor Inbetriebnahme ausgebildet sein.

Grundsätzlich wird erfindungsgemäß vorgeschlagen, eine maximal-ratio-combining für mehrere Sensorelemente, die gemeinsam einem Sendeelement zugeordnet sind, zu verwenden. Die Gewichtungseinheit 24 ist dabei zum Ermitteln der individuellen Gewichtungsparameter ausgebildet, wobei diese Gewichtungsparameter vom Signal-zu-Rausch-Verhältnis der einzelnen Sensorelemente abhängen. Insbesondere kann eine Gewichtung proportional zum root mean square des Signallevels und invers-proportional zum Rauschlevel verwendet werden. In der Gewichtungseinheit 24 werden die Gewichtungsfaktoren individuell für jeden Empfangspfad, also für jedes Sensorelement bestimmt.

Zum Ermitteln der Gewichtungsparameter ist es einerseits möglich, dass die Signalstärke im Fernfeld (root-square) für alle Sensorelemente der Makrozelle in einer Kalibrierungsphase ermittelt wird. Hierzu kann eine Vermessung einer Spot-Position bei einer Werkskalibrierung vorgenommen werden. Zudem ist es möglich, einzelne Sensorelemente zu aktivieren, um nacheinander jeweils deren Signal-zu-Rauschverhältnis ermitteln zu können. Grundsätzlich ist das Rauschlevel abhängig vom Umgebungslicht und kann beispielsweise vor dem Aussenden eines Laserpulses jeweils ermittelt werden. Die Sensorelemente innerhalb der Spot-Fernfeldpositionen werden gewichtet summiert. Die Sensorelemente außerhalb der Spot-Positionen können ausgeschaltet werden.

In der Summationseinheit 26 wird ein Histogramm mit einer Zuordnung der Detektionen zu Detektionszeitpunkten der Detektionen erzeugt. Die Summation der Sensorelemente bzw. der Detektionen der Sensorelemente ist eventbasiert. Jedes Sensorelement erzeugt bei der Detektion eines Photons ein binäres Ausgangssignal. Der Zeitpunkt des Auftreffens wird ermittelt und in einem Histogramm eingetragen. Bei der Erzeugung des Histogramms werden die zuvor ermittelten individuellen Gewichtungsparameter berücksichtigt.

Insbesondere ist es möglich, dass direkt alle Detektionen in einem gemeinsamen Histogramm gespeichert werden. Hierbei kann die Gewichtung insbesondere basierend auf ganzzahligen Gewichtungsfaktoren erfolgen. Eine Detektion eines Sensorelements mit hohem Signal-zu-Rauschverhältnis kann beispielsweise ein Inkrement von 4 im entsprechenden Bin des Histogramms erzeugen (Gewichtungsfaktor 4). Eine Detektion in einem Sensorelement mit mittlerem Signal-zu-Rausch-Verhältnis kann ein Inkrement von 2 im entsprechenden Bin des Histogramms erzeugen (Gewichtungsfaktor 2). Eine Detektion in einem Sensorelement mit niedrigem Signal-zu-Rausch-Verhältnis kann beispielsweise ein Inkrement von 1 im entsprechenden Bin des Histogramms erzeugen (Gewichtungsfaktor 1). Sensorelemente, die außerhalb der Spot-Position liegen, können beispielsweise verworfen werden.

Alternativ hierzu ist es möglich, dass die Gewichtung von Verwerfen von Detektionen von Sensorelementen mit niedrigem Signal-zu-Rausch-Verhältnis vorgenommen wird. Ein Verwerfen einzelner Detektionen kann durch einfache Zähler bzw. basierend auf einem Zählfaktor, der angibt, welche Detektionen zu verwerfen sind, realisiert werden. Beispielsweise kann ein Sensorelement mit hohem Signal-zu-Rausch-Verhältnis bei jedem Event ein Inkrement des entsprechenden Bins des Histogramms auslösen (Zählfaktor 1). Ein Sensorelement mit mittlerem Signal-zu-Rausch-Verhältnis kann beispielsweise bei jeder zweiten Detektion ein Inkrement des entsprechenden Bins des Histogramms auflösen (Zählfaktor 2). Ein Sensorelement mit niedrigem Signal-zu-Rausch-Verhältnis kann beispielsweise bei jedem vierten Event ein Inkrement von 1 im entsprechenden Bin des Histogramms erzeugen (Zählfaktor 4).

Die Verwendung von ganzzahligen Zählfaktoren und Gewichtungsfaktoren, insbesondere Zweierpotenzen, sind hardwaremäßig besonders vorteilhaft realisierbar. Die Verwendung eines Zählfaktors ist dabei sogar noch effizienter umsetzbar, hat jedoch gegebenenfalls eine schlechtere Performanz, da Detektionen von Sensorelementen mit hohen Signal-zu-Rausch-Verhältnissen verworfen und nicht berücksichtigt werden.

Ebenfalls ist es möglich, das Histogramm derart zu erzeugen, dass mehrere Teilhistogramme, die jeweils separat für jedes Sensorelement erstellt wurden, addiert werden. Eine Gewichtung der Inhalte der Bins der Histogramme basierend auf den Gewichtungsparametern kann vorgenommen werden.

In der Laufzeiteinheit 28 wird basierend auf dem erzeugten Histogramm eine Signallaufzeit ermittelt. Hierzu kann insbesondere ein Hochpunkt des Histogramms detektiert werden. Der Hochpunkt entspricht dem Zeitpunkt der höchsten Signalstärke und damit dem Ort der Reflexion des Lichtpulses an einem Objekt.

Die ermittelte Signallaufzeit wird über die Ausgabeeinheit 30 ausgegeben. Insbesondere kann dann eine Objektlokalisierung erfolgen.

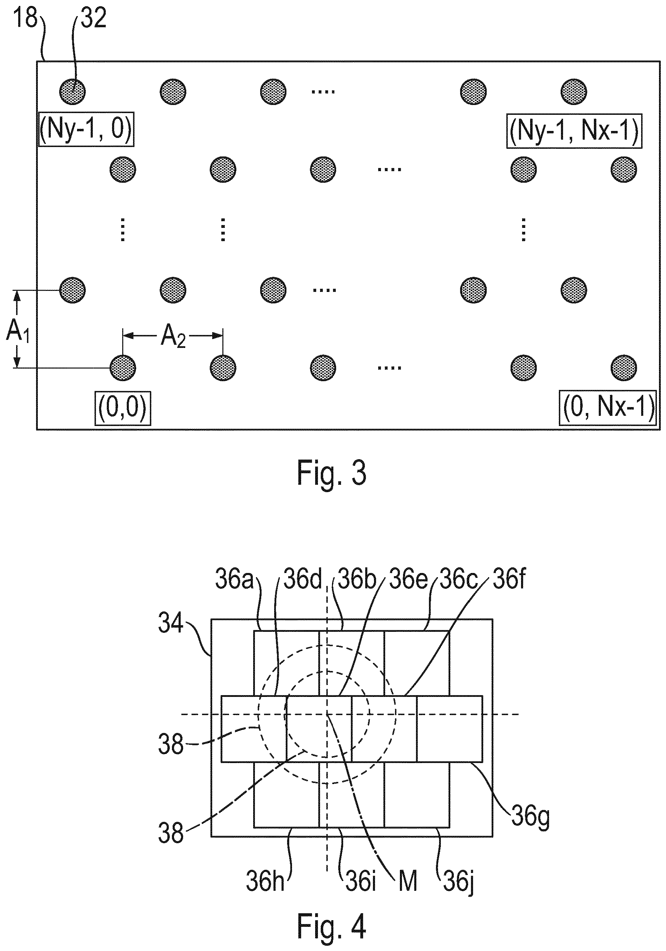

In der Fig. 3 ist schematisch die Struktur der Lidar-Sendeeinheit 18 dargestellt. Der Chip umfasst mehrere Sendeelemente 32, die in einem Array (Matrix) angeordnet sind. Beispielsweise können mehrere Tausend Sendeelemente verwendet werden. Die Sendeelemente 32 werden vorzugsweise zeilenweise angesteuert. Zur besseren Übersichtlichkeit ist nur ein Sendeelement 32 mit einem Bezugszeichen versehen.

Im dargestellten Ausführungsbeispiel umfassen die Zeilen 0..ny-1 jeweils eine Vielzahl an Sendeelementen 0..nx-1. Beispielsweise können 100 Zeilen (ny = 100) und 128 Sendeelemente pro Zeile (nx = 128) vorgesehen sein. Der Zeilenabstand A1 zwischen den Zeilen kann im Bereich einiger Mikrometer, beispielsweise 40 µm, liegen. Der Elementabstand A2 zwischen Sendeelementen 32 in derselben Zeile kann in einer ähnlichen Größenordnung liegen.

In der Fig. 4 ist schematisch eine Makrozelle 34 mit insgesamt 10 Sensorelementen 36a - 36j dargestellt. Zudem ist schematisch die Spot-Position 38, also die Position eines Spots, der dem Sendeelement der Lidar-Sendeeinheit entspricht, dargestellt. Der Spot weist dabei üblicherweise ein zumindest näherungsweise gaußförmiges Spotprofil auf. In der Darstellung in der Fig. 4 ist durch die beiden konzentrischen Kreise der Spot-Position 38 angedeutet, wie sich die Signalstärke innerhalb dieses Spotprofils nach außen hin verringert. Wie dargestellt ist der Mittelpunkt des Spots in Sensorelement 36e und damit außerhalb eines Mittelpunkts der Makrozelle 34. Das Sensorelement 36e wird demnach den höchsten Signalanteil aufweisen. Erfindungsgemäß wird durch die individuellen Gewichtungsfaktoren, die jeweils den Sendeelementen 36a - 36j zugeordnet sind, festgelegt, wie stark diese Sensorelemente bei der Erzeugung des Histogramms gewichtet werden. Im dargestellten Beispiel ist es denkbar, dass die Sensorelemente 36g und 36j mit einem Gewicht von 0 berücksichtigt werden und nicht bei der Ermittlung des Histogramms mit einbezogen werden. Das Sensorelement 36e kann vierfach gewichtet werden, die Sensorelemente 36a, 36b und 36 können doppelt gewichtet werden, die verbleibenden Sensorelemente können einfach gewichtet werden. Die Darstellung der Fig. 4 und die oben angegebenen Gewichtungen sind dabei beispielhaft zu verstehen. Es versteht sich, dass auch andere Anzahlen von Sensorelementen in einer Makrozelle angeordnet sein können und andere Gewichtungen verwendet werden können.

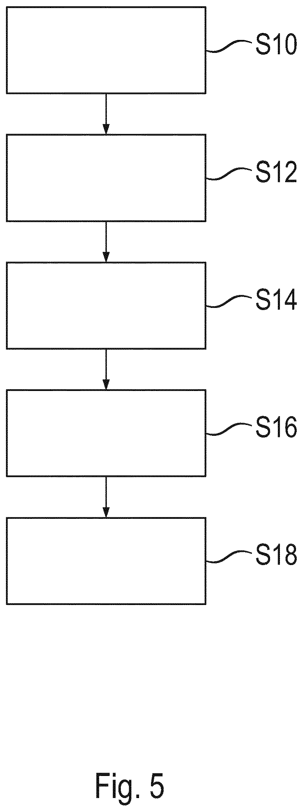

In der Fig. 5 ist schematisch ein erfindungsgemäßes Verfahren dargestellt. Das Verfahren umfasst Schritte des Empfangens S10 von Detektionen, des Ermittelns S12 jeweils eines individuellen Gewichtungsparameters, des Erzeugens S14 eines Histogramms, des Ermittelns S16 einer Signallaufzeit und des Ausgebens S18 der Signallaufzeit. Das Verfahren kann beispielsweise in Software implementiert sein, die auf einem Prozessor einer Lidar-Messvorrichtung ausgeführt wird.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Ein Element, eine Einheit, eine Schnittstelle, eine Vorrichtung und ein System können teilweise oder vollständig in Hard- und/oder in Software umgesetzt sein. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Bezugszeichen in den Patentansprüchen sind nicht einschränkend zu verstehen.

### Bezugszeichen

- 10: Lidar-Messvorrichtung
- 12: Objekt
- 14: Fahrzeug
- 16: Lidar-Empfangseinheit
- 18: Lidar-Sendeeinheit

- 20: Auslesevorrichtung
- 22: Eingangsschnittstelle
- 24: Gewichtungseinheit
- 26: Summationseinheit
- 28: Laufzeiteinheit

- 30: Ausgabeeinheit
- 32: Sendeelement
- 34: Makrozelle
- 36a-36j: Sensorelement
- 38: Spot-Position

## Patentansprüche

1. Auslesevorrichtung (20) zum Ermitteln einer Signallaufzeit eines Lichtpulses zwischen einer Lidar-Sendeeinheit (18) und einer Lidar-Empfangseinheit (16) einer Lidar-Messvorrichtung (10) in Focal Plane Array-Anordnung, mit:
einer Eingangsschnittstelle (22) zum Empfangen von Detektionen mehrerer Sensorelemente (36a-36j) der Lidar-Empfangseinheit, die in einer einem Sendeelement (32) der Lidar-Sendeeinheit zugeordneten Makrozelle (34) angeordnet sind;
einer Gewichtungseinheit (24) zum Ermitteln jeweils eines individuellen Gewichtungsparameters für jedes der mehreren Sensorelemente, wobei der Gewichtungsparameter von einem Signal-zu-Rausch-Verhältnis des Sensorelements abhängt;
einer Summationseinheit (26) zum Erzeugen eines Histogramms mit einer Zuordnung der Detektionen zu Detektionszeitpunkten der Detektionen, wobei die Summationseinheit zum Gewichten der Detektionen basierend auf den individuellen Gewichtungsparametern ausgebildet ist;
einer Laufzeiteinheit (28) zum Ermitteln der Signallaufzeit basierend auf dem erzeugten Histogramm; und
einer Ausgabeeinheit (30) zum Ausgeben der Signallaufzeit,
**dadurch gekennzeichnet, dass**
die Gewichtungseinheit (24) zum Ermitteln der individuellen Gewichtungsparameter basierend auf einer Kalibrierungsvermessung einer Spot-Position (38) auf der Makrozelle (34) ausgebildet ist und Sensorelemente (36a-36j) mit steigendem Abstand zu einem Mittelpunkt (M) der Spot-Position eine geringere Gewichtung erhalten;
und/oder dadurch, dass
die Gewichtungseinheit (24) zum Ermitteln der individuellen Gewichtungsparameter basierend auf einer sequenziellen individuellen Kalibrierungsauslesung der Sensorelemente (36a-36j) bei gleichbleibender Signallaufzeit ausgebildet ist und Sensorelemente (36a-36j) mit einer höheren Anzahl an Detektionen in der Kalibrierungsauslesung eine höhere Gewichtung erhalten;
und/oder dadurch, dass
die Gewichtungseinheit (24) zum Ermitteln der individuellen Gewichtungsparameter basierend auf einem individuellen Rauschparameter des jeweiligen Sensorelements ausgebildet ist und der individuelle Rauschparameter ein Signalrauschen des jeweiligen Sensorelements beschreibt;
und/oder dadurch, dass
die Gewichtungseinheit (24) zum Ermitteln von individuellen Gewichtungsparametern mit ganzzahligen Gewichtungsfaktoren ausgebildet ist; und die Summationseinheit (26) zum Erzeugen des Histogramms basierend auf einer mehrfachen Zählung von Detektionen entsprechend den ganzzahligen Gewichtungsfaktoren ausgebildet ist;
und/oder dadurch, dass
die Gewichtungseinheit (24) zum Erzeugen jeweils eines Teilhistogramms für jedes Sensorelement ausgebildet ist; und
die Gewichtungseinheit zum Ermitteln der individuellen Gewichtungsparameter basierend auf einer Auswertung der Teilhistogramme ausgebildet ist; und
die Summationseinheit (26) zum Erzeugen des Histogramms basierend auf einer mit den individuellen Gewichtungsparametern gewichteten Summation der Teilhistogramme ausgebildet ist.

2. Auslesevorrichtung (20) nach Anspruch 1, wobei
die Gewichtungseinheit (24) zum Ermitteln von individuellen Gewichtungsparametern mit ganzzahligen Zählfaktoren ausgebildet ist;
die Summationseinheit (26) zum Erzeugen des Histogramms basierend auf einer ausschließlichen Zählung von Detektionen, die einem Vielfachen des jeweiligen Zählfaktors des Sensorelements entsprechen, und zum Verwerfen der übrigen Detektionen ausgebildet ist.

3. Auslesevorrichtung (20) nach einem der vorstehenden Ansprüche, wobei die Lidar-Messvorrichtung (10) zum Ausführen eines Time Correlated Single Photon Counting-, TCSPC, Messverfahrens ausgebildet ist.

4. Lidar-Messvorrichtung (10) in Focal Plane Array-Anordnung zum Detektieren von Objekten (12) in einer Umgebung eines Fahrzeugs (14), mit:
einer Lidar-Sendeeinheit (18) mit einer Vielzahl an Sendeelementen (32) zum Aussenden von Lichtpulsen und einer Lidar-Empfangseinheit (16) mit einer Vielzahl von Sensorelementen (36a-36j) zum Empfangen der Lichtpulse, wobei die Sendeelemente und die Sensorelemente in Zeilen angeordnet sind, die parallel zu einer Horizontalebene des Fahrzeugs verlaufen; und
einer Auslesevorrichtung (20) nach einem der vorstehenden Ansprüche.

5. Lidar-Messvorrichtung (10) nach Anspruch 4, wobei die Lidar-Messvorrichtung zum Anbringen an ein Fahrzeug (14) in einem Bereich einer Stoßstange des Fahrzeugs ausgebildet ist.

6. Verfahren zum Ermitteln einer Signallaufzeit eines Lichtpulses zwischen einer Lidar-Sendeeinheit (18) und einer Lidar-Empfangseinheit (16) einer Lidar-Messvorrichtung (10) in Focal Plane Array-Anordnung, mit den Schritten:
Empfangen (S10) von Detektionen mehrerer Sensorelemente (36a-36j) der Lidar-Empfangseinheit, die in einer einem Sendeelement (32) der Lidar-Sendeeinheit zugeordneten Makrozelle (34) angeordnet sind;
Ermitteln (S12) jeweils eines individuellen Gewichtungsparameters für die mehreren Sensorelemente, wobei der Gewichtungsparameter von einem Signal-zu-Rausch-Verhältnis des Sensorelements abhängt;
Erzeugen (S14) eines Histogramms mit einer Zuordnung der Detektionen zu Detektionszeitpunkten der Detektionen, wobei die Summationseinheit zum Gewichten der Detektionen basierend auf den individuellen Gewichtungsparametern ausgebildet ist;
Ermitteln (S16) der Signallaufzeit basierend auf dem erzeugten Histogramm;
und Ausgeben (S18) der Signallaufzeit,
**dadurch gekennzeichnet, dass**
mittels der Gewichtungseinheit (24) die individuellen Gewichtungsparameter basierend auf einer Kalibrierungsvermessung einer Spot-Position (38) auf der Makrozelle (34) ermittelt werden;
wobei Sensorelemente (36a-36j) mit steigendem Abstand zu einem Mittelpunkt (M) der Spot-Position eine geringere Gewichtung erhalten;
und/oder dadurch, dass
mittels der Gewichtungseinheit (24) die individuellen Gewichtungsparameter basierend auf einer sequenziellen individuellen Kalibrierungsauslesung der Sensorelemente (36a-36j) bei gleichbleibender Signallaufzeit ermittelt werden;
wobei Sensorelemente (36a-36j) mit einer höheren Anzahl an Detektionen in der Kalibrierungsauslesung eine höhere Gewichtung erhalten;
und/oder dadurch, dass
mittels der Gewichtungseinheit (24) die individuellen Gewichtungsparameter basierend auf einem individuellen Rauschparameter des jeweiligen Sensorelements ermittelt werden und der individuelle Rauschparameter ein Signalrauschen des jeweiligen Sensorelements beschreibt;
und/oder dadurch, dass
mittels der Gewichtungseinheit (24) die individuellen Gewichtungsparametern mit ganzzahligen Gewichtungsfaktoren ermittelt werden;
wobei mittels der Summationseinheit (26) das Histogramm basierend auf einer mehrfachen Zählung von Detektionen entsprechend den ganzzahligen Gewichtungsfaktoren erzeugt wird;
und/oder dadurch, dass
mittels der Gewichtungseinheit (24) jeweils ein Teilhistogramm für jedes Sensorelement ermittelt wird; und
mittels der Gewichtungseinheit die individuellen Gewichtungsparameter basierend auf einer Auswertung der Teilhistogramme ermittelt werden; und
mittels der Summationseinheit (26) das Histogramm basierend auf einer mit den individuellen Gewichtungsparametern gewichteten Summation der Teilhistogramme erzeugt wird.

7. Computerprogrammprodukt mit Programmcode zum Durchführen der Schritte des Verfahrens nach Anspruch 6, wenn der Programmcode auf einem Computer der Lidar-Messvorrichtung nach einem der Ansprüche 4 oder 5 ausgeführt wird.

## Claims

1. Readout device (20) for determining a signal propagation time of a light pulse between a lidar transmitting unit (18) and a lidar receiving unit (16) of a lidar measuring device (10) in a focal plane array arrangement, with:
an input interface (22) for receiving detections of several sensor elements (36a-36j) of the lidar receiving unit, which are arranged in a macrocell (34) assigned to a transmitting element (32) of the lidar transmitting unit;
a weighting unit (24) for determining an individual weighting parameter for each of the several sensor elements, wherein the weighting parameter depends on a signal-to-noise ratio of the sensor element;
a summation unit (26) for generating a histogram with an assignment of the detections to detection times of the detections, wherein the summation unit is formed for weighting the detections based on the individual weighting parameters;
a propagation time unit (28) for determining the signal propagation time based on the generated histogram; and
an output unit (30) for outputting the signal propagation time,
**characterized in that**
the weighting unit (24) is formed for determining the individual weighting parameters based on a calibration measurement of a spot position (38) on the macrocell (34) and
sensor elements (36a-36j) are given a lower weighting with increasing distance from a center point (M) of the spot position;
and/or **in that**
the weighting unit (24) is formed for determining the individual weighting parameters based on a sequential individual calibration readout of the sensor elements (36a-36j) with a constant signal propagation time and
sensor elements (36a-36j) with a higher number of detections are given a higher weighting in the calibration readout;
and/or **in that**
the weighting unit (24) is formed for determining the individual weighting parameters based on an individual noise parameter of the respective sensor element and the individual noise parameter describes a signal noise of the respective sensor element;
and/or **in that**
the weighting unit (24) is formed for determining individual weighting parameters with integer weighting factors; and
the summation unit (26) is formed for generating the histogram based on a multiple count of detections corresponding to the integer weighting factors;
and/or **in that**
the weighting unit (24) is formed for generating a respective partial histogram for each sensor element; and
the weighting unit is formed for determining the individual weighting parameters based on an evaluation of the partial histograms; and
the summation unit (26) is formed for generating the histogram based on a summation of the partial histograms weighted with the individual weighting parameters.

2. Readout device (20) according to claim 1, wherein
the weighting unit (24) is formed for determining individual weighting parameters with integer counting factors;
the summation unit (26) is formed for generating the histogram based on an exclusive count of detections corresponding to a multiple of the respective count factor of the sensor element and for discarding the remaining detections.

3. Readout device (20) according to one of the preceding claims, wherein the lidar measuring device (10) is formed for carrying out a Time Correlated Single Photon Counting, TCSPC, measuring method.

4. Lidar measuring device (10) in focal plane array arrangement for detecting objects (12) in an environment of a vehicle (14), with:
a lidar transmitting unit (18) with a plurality of transmitting elements (32) for transmitting light pulses and a lidar receiving unit (16) with a plurality of sensing elements (36a-36j) for receiving the light pulses, wherein the transmitting elements and the sensor elements are arranged in lines parallel to a horizontal plane of the vehicle; and
a readout device (20) according to one of the preceding claims.

5. Lidar measuring device (10) according to claim 4, wherein the lidar measuring device is formed to be attached to a vehicle (14) in a region of a bumper of the vehicle.

6. Method for determining a signal propagation time of a light pulse between a lidar transmitting unit (18) and a lidar receiving unit (16) of a lidar measuring device (10) in a focal plane array arrangement, with the following steps:
receiving (S10) detections of several sensor elements (36a-36j) of the lidar receiving unit, which are arranged in a macrocell (34) assigned to a transmitting element (32) of the lidar transmitting unit;
determining (S12) a respective individual weighting parameter for each of the several sensor elements, wherein the weighting parameter depends on a signal-to-noise ratio of the sensor element;
generating (S14) a histogram with an assignment of the detections to detection times of the detections, wherein the summation unit is formed for weighting the detections based on the individual weighting parameters;
determining (S16) the signal propagation time based on the generated histogram; and outputting (S18) the signal propagation time,
**characterized in that**
the individual weighting parameters are determined by means of the weighting unit (24) based on a calibration measurement of a spot position (38) on the macrocell (34);
wherein sensor elements (36a-36j) are given a lower weighting with increasing distance from a center point (M) of the spot position;
and/or **in that**
the individual weighting parameters are determined by means of the weighting unit (24) based on a sequential individual calibration readout of the sensor elements (36a-36j) while the signal propagation time remains constant;
wherein sensor elements (36a-36j) with a higher number of detections are given a higher weighting in the calibration readout;
and/or **in that**
the individual weighting parameters are determined by means of the weighting unit (24) based on an individual noise parameter of the respective sensor element and the individual noise parameter describes a signal noise of the respective sensor element;
and/or **in that**
the individual weighting parameters are determined by means of the weighting unit (24) with integer weighting factors;
wherein the histogram is generated by means of the summation unit (26) based on a multiple count of detections corresponding to the integer weighting factors;
and/or **in that**
by means of the weighting unit (24) a partial histogram is determined for each sensor element; and
by means of the weighting unit the individual weighting parameters are determined based on an evaluation of the partial histograms; and
by means of the summation unit (26) the histogram is generated based on a summation of the partial histograms weighted with the individual weighting parameters.

7. Computer program product with program code for performing the steps of the method according to claim 6, when the program code is executed on a computer of the lidar measuring device according to one of claims 4 or 5.

## Revendications

1. Dispositif de lecture (20) pour déterminer un temps de propagation d'un signal d'une impulsion lumineuse entre une unité d'émission lidar (18) et une unité de réception lidar (16) d'un dispositif de mesure lidar (10) dans une disposition en réseau à plan focal, comprenant :
une interface d'entrée (22) pour recevoir des détections d'une pluralité d'éléments de détection (36a-36j) de l'unité de réception lidar, qui sont disposés dans une macrocellule (34) associée à un élément d'émission (32) de l'unité d'émission lidar ;
une unité de pondération (24) pour déterminer respectivement un paramètre de pondération individuel pour chacun de la pluralité d'éléments de détection, le paramètre de pondération dépendant d'un rapport signal sur bruit de l'élément de détection ;
une unité de sommation (26) pour générer un histogramme avec une affectation des détections à des instants de détection des détections, l'unité de sommation étant conçue pour pondérer les détections sur la base des paramètres de pondération individuels ;
une unité de temps de propagation (28) pour déterminer le temps de propagation du signal sur la base de l'histogramme généré ; et
une unité de sortie (30) pour émettre le temps de propagation du signal,
**caractérisé en ce que**
l'unité de pondération (24) est conçue pour déterminer les paramètres de pondération individuels sur la base d'une mesure de calibrage d'une position de spot (38) sur la macrocellule (34) et
des éléments de détection (36a-36j) reçoivent une pondération plus faible lorsque la distance par rapport à un centre (M) de la position du spot augmente ;
et/ou **en ce que**
l'unité de pondération (24) est conçue pour déterminer les paramètres de pondération individuels sur la base d'une lecture d'étalonnage individuelle séquentielle des éléments de détection (36a-36j) avec un temps de propagation de signal constant et
des éléments de détection (36a-36j) ayant un nombre plus élevé de détections reçoivent une pondération plus importante dans la lecture d'étalonnage ;
et/ou **en ce que**
l'unité de pondération (24)
est conçue pour déterminer les paramètres de pondération individuels sur la base d'un paramètre de bruit individuel de l'élément de détection respectif et
le paramètre de bruit individuel décrit un bruit de signal de l'élément de détection respectif ;
et/ou **en ce que**
l'unité de pondération (24) est conçue pour déterminer des paramètres de pondération individuels avec des facteurs de pondération entiers ; et
l'unité de sommation (26) est adaptée pour générer l'histogramme sur la base d'un comptage multiple de détections correspondant aux facteurs de pondération entiers ; et/ou **en ce que**
l'unité de pondération (24) est conçue pour générer un histogramme partiel pour chaque élément de détection ; et
l'unité de pondération est conçue pour déterminer les paramètres de pondération individuels sur la base d'une évaluation des histogrammes partiels ; et
l'unité de sommation (26) est conçue pour générer l'histogramme sur la base d'une sommation des histogrammes partiels pondérée par les paramètres de pondération individuels.

2. Dispositif de lecture (20) selon la revendication 1, dans lequel
l'unité de pondération (24) est conçue pour déterminer des paramètres de pondération individuels avec des facteurs de comptage entiers ;
l'unité de sommation (26) est conçue pour générer l'histogramme sur la base d'un comptage exclusif de détections qui correspondent à un multiple du facteur de comptage respectif de l'élément de détection, et pour rejeter les autres détections.

3. Dispositif de lecture (20) selon l'une quelconque des revendications précédentes, dans lequel le dispositif de mesure lidar (10) est configuré pour mettre en œuvre un procédé de mesure Time Correlated Single Photon Counting, TCSPC.

4. Dispositif de mesure lidar (10) dans une disposition en réseau plan focal pour la détection d'objets (12) dans un environnement d'un véhicule (14), avec :
une unité d'émission lidar (18) comprenant une pluralité d'éléments d'émission (32) pour émettre des impulsions lumineuses et une unité de réception lidar (16) comprenant une pluralité d'éléments de détection (36a-36j) pour recevoir les impulsions lumineuses, dans laquelle les éléments d'émission et les éléments de détection sont disposés en lignes qui sont parallèles à un plan horizontal du véhicule ; et
d'un dispositif de lecture (20) selon l'une quelconque des revendications précédentes.

5. Dispositif de mesure lidar (10) selon la revendication 4, dans lequel le dispositif de mesure lidar est conçu pour être monté sur un véhicule (14) dans une zone d'un pare-chocs du véhicule.

6. Procédé de détermination d'un temps de propagation d'un signal d'une impulsion lumineuse entre une unité d'émission lidar (18) et une unité de réception lidar (16) d'un dispositif de mesure lidar (10) dans un agencement de réseau plan focal, comprenant les étapes consistant à :
la réception (S10) de détections de plusieurs éléments de détection (36a-36j) de l'unité de réception lidar, qui sont disposés dans une macrocellule (34) associée à un élément émetteur (32) de l'unité d'émission lidar ;
déterminer (S12) un paramètre de pondération individuel pour chacun de la pluralité d'éléments de détection, le paramètre de pondération dépendant d'un rapport signal sur bruit de l'élément de détection ;
générer (S14) un histogramme avec une affectation des détections à des instants de détection des détections, l'unité de sommation étant conçue pour pondérer les détections sur la base des paramètres de pondération individuels;
déterminer (S16) le temps de propagation du signal sur la base de l'histogramme généré ; et délivrer (S18) le temps de propagation du signal,
**caractérisé en ce que**
au moyen de l'unité de pondération (24), les paramètres de pondération individuels sont déterminés sur la base d'une mesure de calibrage d'une position de spot (38) sur la macrocellule (34) ;
dans lequel des éléments de détection (36a-36j) reçoivent une pondération plus faible à mesure que la distance par rapport à un centre (M) de la position de spot augmente ;
et/ou **en ce que**
au moyen de l'unité de pondération (24), les paramètres de pondération individuels sont déterminés sur la base d'une lecture de calibrage individuel séquentiel des éléments de détection (36a-36j) avec un temps de propagation de signal constant ;
dans lequel les éléments de détection (36a-36j) ayant un nombre plus élevé de détections dans la lecture d'étalonnage reçoivent une pondération plus élevée; et/ou **en ce que**
au moyen de l'unité de pondération (24), les paramètres de pondération individuels sont déterminés sur la base d'un paramètre de bruit individuel de l'élément de détection respectif et le paramètre de bruit individuel décrit un bruit de signal de l'élément de détection respectif ;
et/ou **en ce que**
les paramètres de pondération individuels sont déterminés au moyen de l'unité de pondération (24) avec des facteurs de pondération entiers ;
dans lequel, au moyen de l'unité de sommation (26), l'histogramme est généré sur la base d'un comptage multiple de détections correspondant aux facteurs de pondération entiers ;
et/ou **en ce que**
un histogramme partiel est déterminé pour chaque élément de détection au moyen de l'unité de pondération (24) ; et
les paramètres de pondération individuels sont déterminés au moyen de l'unité de pondération sur la base d'une évaluation des histogrammes partiels; et
au moyen de l'unité de sommation (26), l'histogramme est généré sur la base d'une sommation des histogrammes partiels pondérée par les paramètres de pondération individuels.

7. Produit programme d'ordinateur comprenant un code de programme pour la mise en œuvre des étapes du procédé selon la revendication 6, lorsque le code de programme est exécuté sur un ordinateur du dispositif de mesure lidar selon l'une des revendications 4 ou 5.
